# EUROPEAN PATENT APPLICATION

(11) **EP 4 763 397 A1**
(43) Date of publication of application: **24.06.2026**
(21) Application number: 24220986.4
(22) Date of filing: 18.12.2024
(51) Int. Cl.: B23K 26/00, B23K 26/03, B23K 26/38, B23K 26/40, B23K 26/402, B23K 26/70

(54) **SYSTEMS AND METHODS FOR LASER CUTTING WORKPIECES**

(71) Applicant: Mr Beam GmbH, 80339 München Bayern (DE)
(72) Inventor: Phillipp, Teja, 80339 Munich (DE); Donner, Sebastian, 80339 Munich (DE)
(74) Representative: Samson & Partner Patentanwälte mbB

(57) **Abstract**

A portable system for laser cutting of workpieces is provided. The workpiece comprises organic materials comprising a first and a second zone having different material properties and being non-detectable from the surface. While executing a laser cutting operation, the system detects with at least one non-imaging detector a change of back radiations emanating from the workpiece, thereby generating detection data indicating the change of the back radiations; processes, by a computing unit, the detection data to determine whether the laser beam is cutting through a transition zone from the first zone to the second zone of the organic material of the workpiece. Based on the determination, the system adapts operational parameters to adjust the laser cutting operation of a laser cutting head for the second zone and to continue laser cutting through the second zone of the workpiece by executing the adjusted laser cutting operation by the laser cutting head.

## Description

### FIELD

The present disclosure generally relates to systems and methods for laser cutting.

### BACKGROUND

Laser cutting or laser beam cutting, refers to the cutting of solid materials by means of continuous or pulsed laser radiation through material ablation. Almost any material, such as metals, dielectrics and organic materials, can be cut with current laser cutting technologies. Although mainly used for industrial manufacturing applications, such as automotive manufacturing, laser cutting technologies are now also employed by small businesses for a broad spectrum of purposes on a variety of materials, such as organic materials like wood, leather etc.

Laser cutting works by directing the output of a laser through a laser optics system on a workpiece to be processed. A commercial laser cutting system may employ a motion control system to follow the pattern to be cut onto the material. The focused laser beam is directed at the workpiece, with the material the laser beam is focused on either being melt, burned, vaporized and/or blown away, eventually by using a jet of process gas, leaving an edge with a high-quality surface finish.

EP 2 585 249 B1 relates to a method for closed-loop controlling a processing operation of a workpiece, comprising the steps of: (a) recording a pixel image at an initial time point of an interaction zone by means of a camera, wherein the workpiece is processed using an actuator having an initial actuator value; (b) converting the pixel image into a pixel vector; (c) representing the pixel vector by a sum of predetermined pixel mappings each multiplied by a corresponding feature value; (d) classifying the set of feature values on the basis of learned feature values into at least two classes of a group of classes comprising a first class of a too high actuator value, a second class of a sufficient actuator value and a third class of a too low actuator value at the initial time point; (e) performing a control step for adapting the actuator value by minimizing the error between a quality indicator and a desired value; and (f) repeating the steps (a) to (e) for further time points to perform a closed-loop controlled processing operation.

DE 10 2016 2082 64 A1 relates to a method for monitoring, in particular controlling, a cutting process, in which a workpiece is cut by means of a high-energy beam, in particular by means of a laser beam, the method comprising: detecting a process light signal, which comes from an area in which the high-energy beam interacts with the workpiece, in a first wavelength range in which at least one metal part of the workpiece has at least one emission line and in a second wavelength range which differs from the first wavelength range and in which continuum radiation, in particular temperature radiation, of the workpiece can be detected without emission lines, and monitoring the cutting process, in particular monitoring vaporization of the at least one metal part, on the basis of an intensity of the process light signal detected in the first wavelength range and on the basis of an intensity of the process light signal detected in the second wavelength range. The invention also relates to an apparatus for carrying out the method.

DE 102013 2095 26 B4 relates to a method for detecting a cut break when cutting a workpiece with a high-energy beam, in particular with a laser beam, comprising: recording an image of an area of the workpiece to be monitored, which includes an interaction area of the high-energy beam with the workpiece, Evaluating the recorded image to detect slag drops at an end of the interaction region opposite a cutting front, and detecting the cut break based on the appearance of the slag drops. The invention also relates to an associated device for detecting a cut break.

### SUMMARY

Hence, there is a need for a laser cutting system.

In this context, systems and methods are presented as defined by the independent claims.

In this respect, according to a first aspect, a portable system for laser cutting of workpieces is provided. The workpiece comprises organic materials comprising a first and a second zone having different material properties and being non-detectable from the surface of the workpiece. The system comprises at least: a laser beam for cutting the workpiece; a laser cutting head comprising at least one non-imaging detector with the laser beam emanating from the laser cutting head, and a computing unit. The system is configured to: execute, by the laser cutting head, a laser cutting operation on the organic material of the workpiece, with the laser cutting head being controlled by operational parameters. While executing the laser cutting operation, the system is configured to detect with the at least one non-imaging detector a change of back radiations emanating from the workpiece, thereby generating detection data indicating the change of the back radiations; to process, by the computing unit, the detection data to determine whether the laser beam is cutting through a transition zone from the first zone to the second zone of the organic material of the workpiece. Based on the determination, the system is configured to adapt at least one operational parameter of the operational parameters, to adjust the laser cutting operation of the laser cutting head for the second zone and to continue laser cutting through the second zone of the workpiece by executing the adjusted laser cutting operation by the laser cutting head.

In another aspect, a method is provided for laser cutting of workpieces comprising organic materials comprising a first and a second zone having different material properties and being non-detectable from the surface of the workpiece. The method is executed at a portable system for laser cutting comprising at least a laser beam for cutting the workpiece, a laser cutting head comprising at least one non-imaging detector, the laser beam emanating from the laser cutting head and a computing unit. The method comprises, at the system: executing, by the laser cutting head, a laser cutting operation on the organic material of the workpiece, with the laser cutting head being controlled by operational parameters. While executing the laser cutting operation, the system detects with the at least one non-imaging detector a change of back radiations emanating from the workpiece, and thereby generates detection data indicating the change of the back radiations. The system processes, by the computing unit, the detection data to determine whether the laser beam is cutting through a transition zone from the first zone to the second zone of the organic material of the workpiece. Based on the determination, the system adapts at least one operational parameter of the operational parameters, to adjust the laser cutting operation of the laser cutting head for the second zone. The system continues laser cutting through the second zone of the workpiece by executing the adjusted laser cutting operation by the laser cutting head.

Finally, a computer program is provided that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 shows a system for laser cutting of an organic workpiece as described herein.
FIG. 2 illustrates a system for laser cutting of an organic workpiece cutting through inhomogeneities of the material of the workpiece.
FIG. 3 depicts a further system for laser cutting of an organic workpiece cutting through inhomogeneities of the material of the workpiece.
FIG. 3A also depicts a further system for laser cutting of an organic workpiece cutting through inhomogeneities of the material of the workpiece.
FIG. 4 illustrates the wavelengths used by the laser beam used for laser cutting.
FIG. 5 depicts a non-imaging detector as described herein.
FIG. 6 shows operational parameters for the laser cutting process as described herein.
FIG. 7 illustrates the artificial intelligence model as described herein.
FIG. 8 depicts the update of the artificial intelligence model as described herein.
FIG. 9 is a diagrammatic representation of internal components of a data processing system comprised by the laser cutting system.

### DETAILED DESCRIPTION

The present disclosure relates to systems and methods for cutting workpieces by a laser beam.

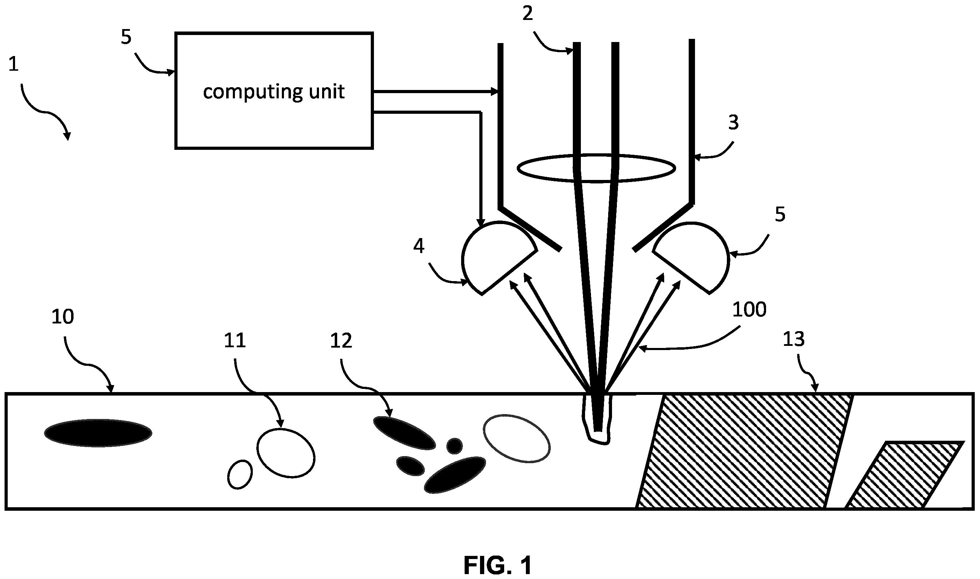

According to a first aspect and shown in FIG. 1, a portable system 1 for laser cutting of workpieces 10 is provided. The workpieces 10 comprise organic materials comprising a first and a second zone having different material properties and being non-detectable from the surface of the workpiece. In embodiments, the workpiece 10 may comprise wooden materials, such as tree wood or any other type of wood suited for production of articles. In embodiments, the workpiece may comprise other organic materials taken from plant materials, such as any types of cork. In further embodiments, organic materials may comprise any type of leather or ivy materials.

The portable system 1 comprises mobile laser cutting systems 1 being deployable e. g. at workshops of small businesses, at laboratories, at offices and at private homes. Portable systems 1 for laser cutting of workpieces 10 comprise laser cutting systems controlling the cutting laser in an automated manner.

As shown in FIGs. 1, 2 and 3 the organic material structure of the workpiece 10 may be inhomogeneous. As an example, a wooden workpiece 10 may comprise inclusions 11 made of resins or fossil resins, but may also comprise knots 12 of any type and size. Furthermore, and also in FIGs. 1, 2, and 3, the workpiece 10 may comprise of zones 13 consisting of different types of wood than the remaining body of the workpiece, with the different types of wood having different material properties with respect to the wooden material of the remaining body of the workpiece 10, e. g. different hardnesses, different degrees of humidity and resin content, etc. In embodiments, the workpiece 10 may also comprise material generated from processed wood, such as pressboard or sheets of laminated fibers, which may be comprised e. g. by the zones 13.

In embodiments, the workpiece 10 may also comprise inorganic materials, such as any type of metals, plastics, or brick, stone or concrete materials. In embodiments, the workpiece may comprise jewelry materials.

As further shown in FIG. 1, the system 1 as provided by the present disclosure comprises a laser beam 2 for cutting the workpiece 10, a laser cutting head 3 comprising at least one non-imaging detector 4, 5, with the laser beam 2 emanating from the laser cutting head 3, and a computing unit 5. The system 1 is configured to: execute, by the laser cutting head 3, a laser cutting operation on the organic material of the workpiece 10, with the laser cutting head being controlled by operational parameters. While executing the laser cutting operation, the system 1 detects with the at least one non-imaging detector 4, 5 a change of back radiations 100 emanating from the workpiece 10, thereby generating detection data indicating the change of the back radiations 100. The system 10 processes, by the computing unit 5, the detection data to determine whether the laser beam 2 is cutting through a transition zone 14 from the first zone to the second zone of the organic material of the workpiece 10. Based on the determination, the system 1 adapts at least one operational parameter of the operational parameters, to adjust the laser cutting operation of the laser cutting head 3 for the second zone and continue laser cutting through the second zone of the workpiece 10 by executing the adjusted laser cutting operation by the laser cutting head 3.

The system as provided above enables laser cutting of workpieces made of inhomogeneous materials, whereas the inhomogeneities are hidden under the surface of the workpiece. Said inhomogeneities are usually not detectable by an imaging system, such as a camera generating a two-dimensional image of the surface of the workpiece.

In state-of-the-art laser cutting systems, such as systems used for industrial manufacturing, two-dimensional images of the surface of the workpiece are used for monitoring, controlling and supervising the laser cutting process, the controlling of said process comprising the adjustment of operational parameters such as laser cutting speed, laser power etc. The features visible on the surface of the workpiece 10 and therefore being detectable, such as edges, levels of the workpiece, contribute to the determination of the operational parameters for a successful laser cutting process. In addition, in the prior art, process emissions, such as reflected laser light and process gas emissions, are used for monitoring the deep penetration of the laser cutting beam through the workpiece and the determination whether the cutting process on the workpiece 10 has been finished. Said systems known in the prior art usually work on workpieces made of homogeneous materials, such as metals, comprising no material features hidden from the surface.

Once, however, the properties and features of the material, such as an organic material, of the workpiece 10 are hidden under the surface of the workpiece 10, images taken from the surface of the workpiece are only of limited use for monitoring and control of the laser cutting process, since the hidden features of the workpiece 10 are not detectable by e. g. a camera. Image data from the surface of the workpiece 10 therefore are not able to form a basis for a proper adjustment of operational parameters such as laser cutting speed and laser power to ensure a successful cutting through zones comprising the features enclosed within the workpiece 10 and hidden from its surface.

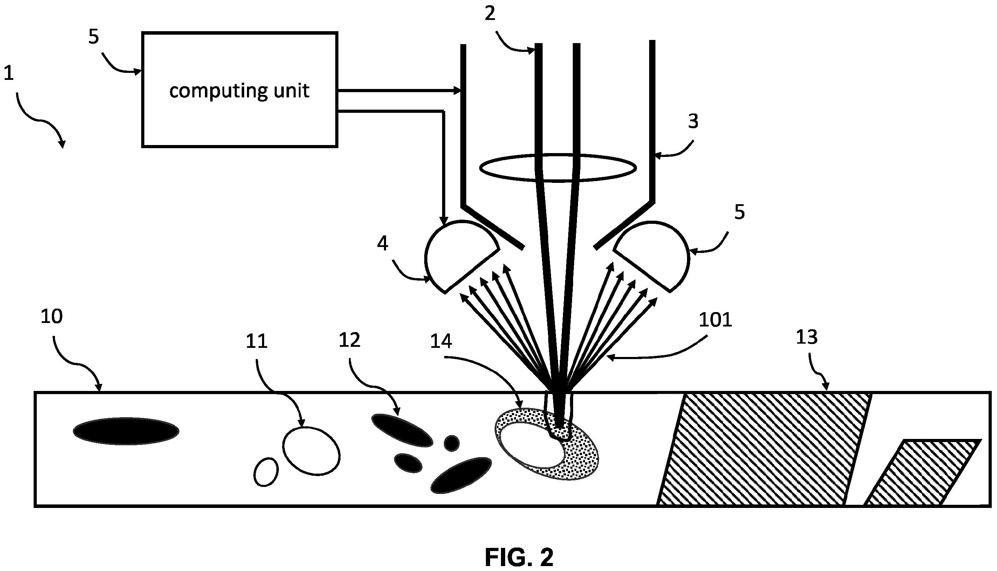

The invention as provided by the present disclosure uses for the monitoring and control of the laser cutting process non-imaging data relating to the process emissions of the laser cutting process, such as the light or radiation 100, 101 radiated back from the workpiece 10 and, optionally, the process gas emissions 102 originating from the workpiece 10. Process emissions, such as the back radiation 100, 101, change when the laser cutting beam 2 cuts through a transition zone 14 in which the properties of the material of the workpiece 10 changes, as shown in FIG. 1 and 2. As also depicted in FIG. 1 the laser cutting process generates an amount of back radiation 100 originating from the current point of processing of the workpiece 10 and being detected by at least one detector 4, 5. Further, as shown in FIG. 2, the laser cutting beam 2 has been moved over the surface of the workpiece 10 from its original position of FIG. 1 during the cutting process and currently cuts through transition zone 14 leading e. g. to an inclusion 11 comprising a resin. This causes a change in the back-radiation 100 from the workpiece 10, as indicated in FIG. 2, where the intensity of the changed back-radiation 101 has increased as the laser beam 2 cuts through the transition zone 14. The change of the back radiation 101 may also comprise a change in the wavelengths of the back radiation 101.

Back radiations 100, 101 originating from the workpiece 10 may be generated either from the laser light of the cutting laser beam 2 reflected back or from electromagnetic radiation generated and emitted when the organic material undergoes chemical or physical reactions when being processed by the laser cutting beam 2.

By detecting the back radiations 100, 101, and their changes e. g. in intensity, wavelengths or spectral patterns by using appropriate detectors 4, 5, detection data indicating the change of the back radiations is generated and processed by the computing unit 5. Said processing enables to determine whether the laser beam 2 is cutting through a transition zone 14 from the first zone to the second zone of the organic material of the workpiece 10. Especially, the nature and the type of the transition zone as well as of the first and second zones are determined. As an example, the transition zone 14 may be a zone leading to an inclusion zone 11 comprising of resin, wherein the transition zone 14 shows an increasing degree of resin content when approaching inclusion zone 11. Based on the detection data, computing unit determined that transition zone 14 comprises a resin content and leads to a zone 11 comprising a resin enclosure. Based on that determination, the laser cutting system 1 adapts the operational parameters for the laser cutting process, such as laser cutting speed, average laser power and laser wavelength, in order to ensure that e. g. undesired chemical reactions of the material of the transition zone 11, which may cause damage to the workpiece or a bad cutting quality, are avoided and the laser cutting process is carried with the same precision and quality as for the remaining material of the workpiece.

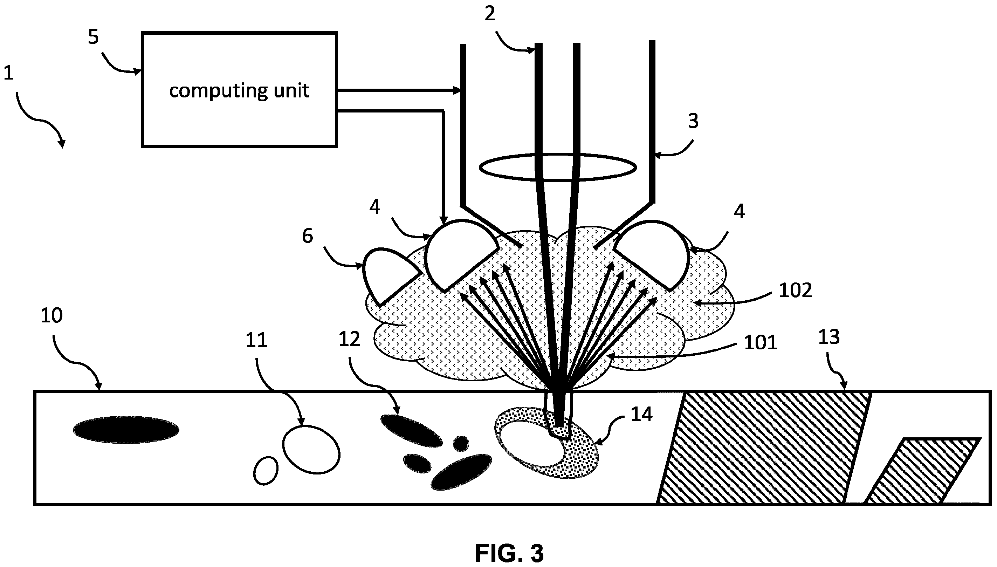

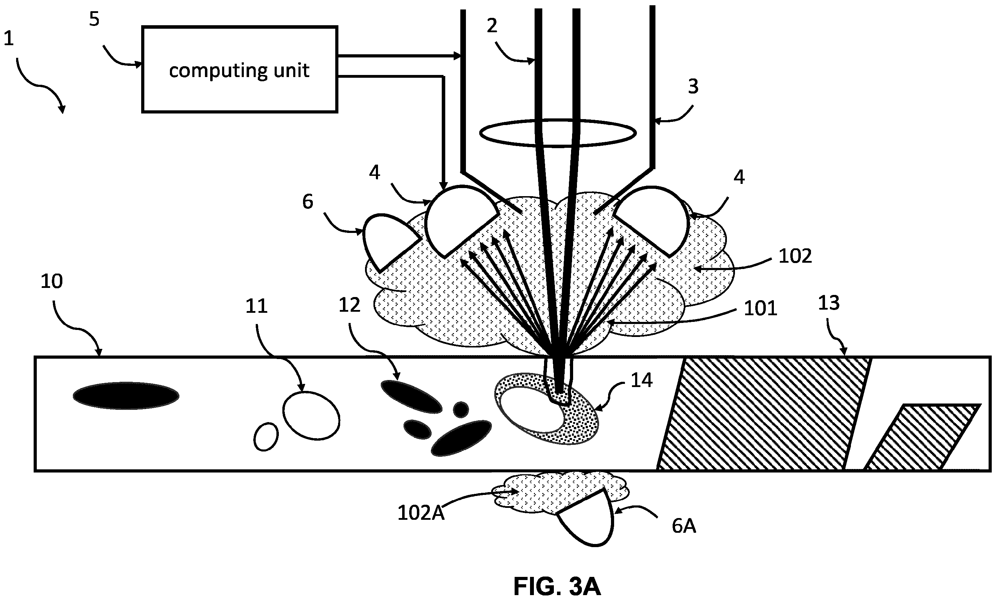

Furthermore, as shown in FIGs. 3, 3A, the process emissions may comprise gaseous emissions 102, comprising e. g. a rate of process gas flowing from the workpiece 10 in a backwards direction relative to the laser cutting beam 2 and in a cone or region around the emitted laser cutting beam 2. Gaseous emissions 102 may also comprise gaseous emissions generated by the organic material of the workpiece 10, e. g. in a chemical reaction in response to the treatment by the laser cutting beam 2, and may also indicate the progress of the laser cutting of the workpiece 10, especially the progress how far the workpiece has already been cut through by the laser cutting beam 2. As for the back-radiations 100, 101, the gaseous emissions 102 may be detected by an appropriate detector 6, as shown in FIG. 3, and the detection data generated hereby and indicative of the gaseous emissions 102 may also form, besides the data relating to the back radiations 100, 101, a basis for the determination of the nature and the type of the transition zone as well as of the first and second zones and the appropriate adaption of the operational parameters.

As shown in FIG. 3A, gaseous emissions 102 may also comprise emissions 102A occurring at a side of the workpiece 10 facing away from the laser cutting head 3. Gas emissions 102A may comprise different components generated by the organic material of the workpiece 10 than gas emissions 102. Further, gas emissions 102A may indicate the progress of the laser cutting of the workpiece 10, especially the progress how far the workpiece has already been cut through by the laser cutting beam 2. In order to be able to detect these gaseous emissions 102 as well, at least one 6A of the one or more gas detection units 6 may be located on a side of the workpiece facing away from the laser cutting head 3, as shown in FIG. 3A. In embodiments, gas detection unit 6A may form a unit being separate from the laser cutting head 3.

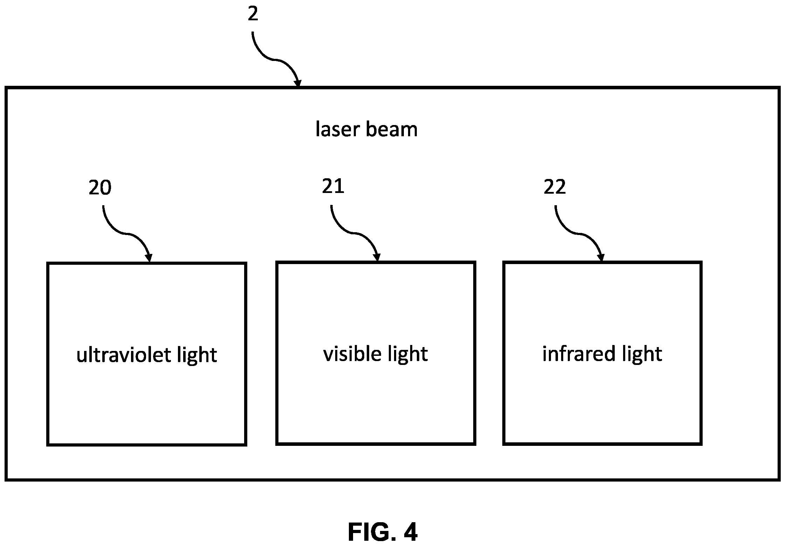

In embodiments and as shown in FIG. 4, the laser beam 2 comprises ultraviolet 20 and/or visible light 21 and/or infrared radiation 22. This enables the adaptation of the laser beam to the light absorptances of the organic material of the workpiece 10 under process, therefore optimizing the machining performance of the laser cutting system 1 for said workpiece 10. In an embodiment, the wavelength of CO₂ laser light at 10.6 µm may be used, as organic materials, especially wood, exhibit good absorption of CO₂ laser light and CO₂-lasers provide high output power at a relatively low cost. In another embodiment, a laser beam with a wavelength of 355 nm may be used, e.g. due to the enhanced absorption of laser light of 355 nm by lignin, a polymeric phenol component that makes up about 30 % of wood. In further embodiments, a wavelength of 532 nm may be used, adapting to the enhanced absorption of e.g. phenolic resin comprised e. g. by the wood.

Further, as the diameter of the beam waist of the (gaussian) laser beam, which is usually focused on the workpiece 10, is proportional to wavelength, meaning that laser beams composing of shorter wavelengths are able to produce smaller spots on the workpiece 10, the use of short-wavelength lasers enables more precise machining in comparison to the use of laser operating at longer wavelength.

In an embodiment and as shown in FIG. 3, the system 1 is further configured to detect with at least one further non-imaging detector 6 comprised by the laser cutting head 3, a change of gaseous emissions 102 from the workpiece 10, thereby generating detection data indicating the change of gaseous emissions 102. This provides additional data originating from different processes than that one causing the back radiations 101 for the determination of the nature and the type of the transition zone 14 as well as of the first and second zones and the appropriate adaption of the operational parameters.

In embodiments, the detector 6 may comprise a sniffer probe or a mass spectrometer to detect a change of the chemical compounds of the fumes 102 emitted from cutting the workpiece 10. The composition of fumes emitted from wood, such as aldehydes and carbon monoxide, may vary e. g. depending on the species of wood the workpiece 10 is made of, and the moisture content of the wood. On the other hand, when the workpiece 10 comprises leather components and when laser cutting said leather components, the emitted fumes may consist of various organic compounds released as the laser heats and vaporizes the surface of the leather components.

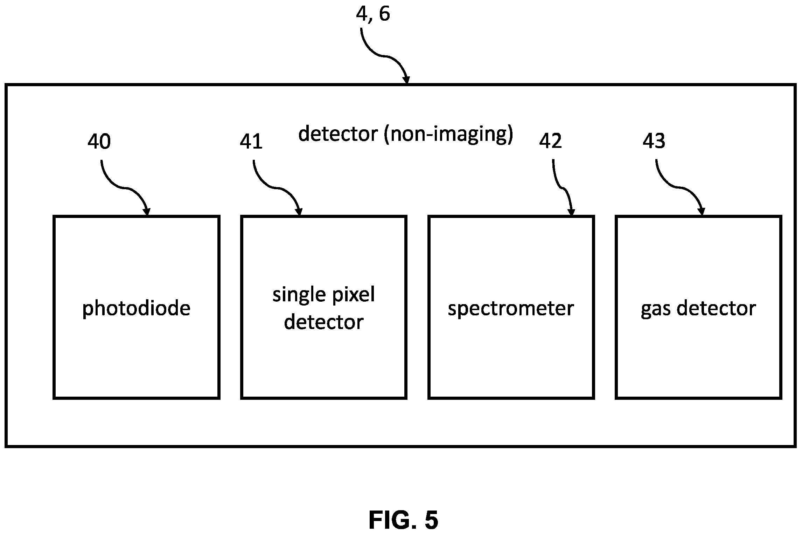

In embodiments and as shown in FIG. 5, the at least one non-imaging detector 4 and the at one further non-imaging detector 6 comprise a photodiode 40 and/or a single-pixel-detector 41 and/or a spectrometer 42 and/or a gas detection unit 43. This enables a flexible and precise detection of the back radiation 100, 101 and the gas emission 102, based on the intensity and the spectral composition of the back radiation 100, 101 and the chemical compounds of the gas emissions 102. Based on detection data generated from these measurements, the components comprising the organic material of the workpiece 10 and being hidden under the surface of workpiece 10 may be determined. In embodiments, the photodiode 40 may comprise one or more photodiodes sensitive to ultraviolet, visible light or infrared back radiation 100, 101. The sensitivity of the photodiode 40 may be adapted to the wavelength used for the laser cutting beam 2. In embodiments, the single pixel detector 41 may comprise a spatial light modulator, being placed above the area to be laser cut. The single-pixel detector 41 may apply a time-varying pattern, such as diffractive optical pattern or a Hadamard lighting pattern for performing synchronized intensity measurements. In embodiments, the principle of compressed sensing is applied to generate a combined measurement, thereby collecting measurements at different wavelengths or at high frame rates or in spatial dimensions. Single-pixel detector may be applied for measuring back radiations 100, 101 as well as gas emissions 102. In embodiments, the non-imaging detector 4 comprises a spectrometer 42, enabling the analysis of the spectral components, such as spectral emission and/or absorption lines, of the back radiation 100, 101 indicating the components of the organic material of the workpiece 10 emitting the corresponding back radiation 100, 101. In embodiments, the spectrometer 42 may comprise one or more ultraviolet, visible or infrared spectrometers. Infrared spectrometers may be used for laser cutting organic materials and plastic materials. In embodiments, the gas sensors 43 may comprise, as aforementioned, sniffing probes and mass spectrometers.

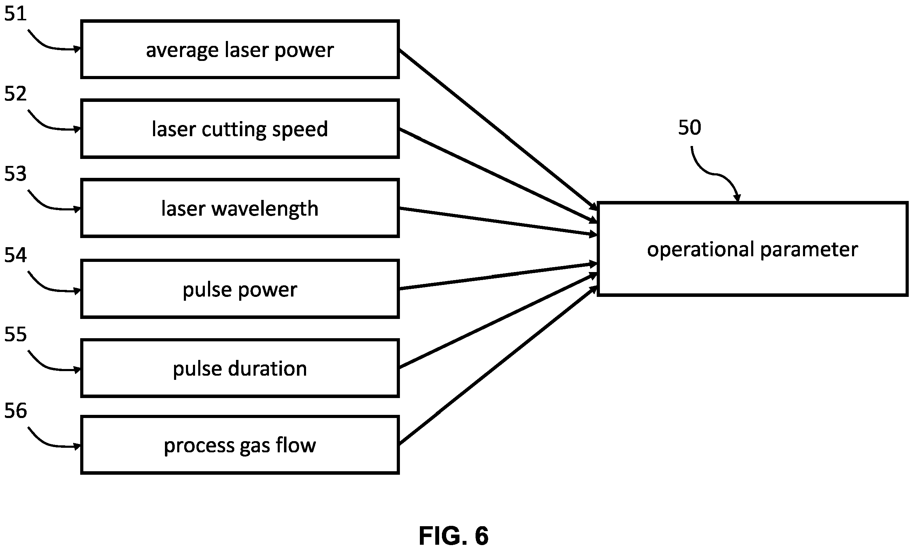

In embodiments and as shown in FIG. 6, the operational parameters 50 comprise an average laser power 51 and/or a laser-cutting speed 52 and or laser wavelength 53 and/or pulse energy 54 and/or pulse duration 55 and/or process gas flow 56. This enables the optimal adaptation of the laser cutting process to the requirements of the material of the workpiece 10, especially the adaptation on changing material properties occurring during the laser cutting process. As an example, the average laser power 51, the pulse power 54 as well as the pulse duration 55 may be adapted to prevent the organic material of the workpiece to be inflamed or chemical degraded during the laser cutting process. To cite further examples, the laser cutting speed 52 may be adapted to the thickness of the workpiece 10 and the laser wavelength 53 to the radiative reflectivity of the workpiece 10 and the material properties of the workpiece, especially to the material properties of the inhomogeneities of the material of the workpiece occurring during the laser cutting process, such as the inclusions 11, knots 12, different materials 13 etc. The process gas 56 may be adapted to the reactivity of the material of the workpiece 10.

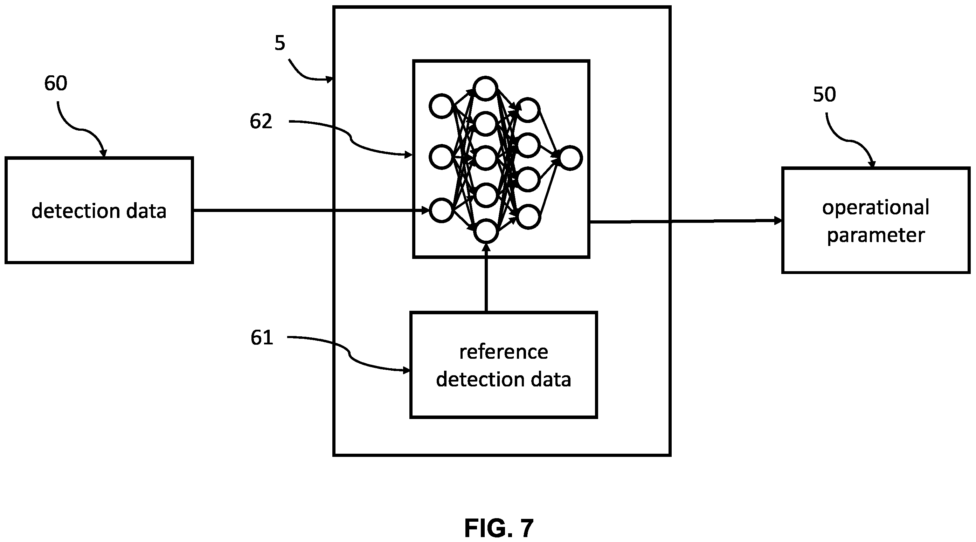

In embodiments and as illustrated in FIG. 7, the laser cutting system 1 may be further configured to process the detection data 60 by using an artificial intelligence model 62 and reference detection data 61 indicating the different material properties. This enables a flexible adaptation of the operational parameters 50 to the changing conditions occurring while laser cutting the workpiece 10. In some embodiments, the artificial intelligence model 62 comprises a deep learning neural network. The neural network may comprise an input layer, at least one hidden layer and one output layer. For the sake of simplicity, in FIG. 7 only two hidden layers are shown for the neural network. As shown exemplarily in FIG. 7, the detection data 60 is input into the input layer and the reference detection data 61 is input into the second hidden layer of neural network. The artificial intelligence model 62 may generate as output the adapted operational parameters optimized for a current situation of the laser cutting process, such as when the laser cutting beam 2 is cutting through a transition zone 14 towards an inclusion 11 or a knot 12, as shown in FIGs. 2 and 3. In some embodiments, the artificial intelligence model 62 comprises a supervised learning and/or unsupervised learning and/or reinforcement learning and/or decision trees. In embodiments, the reference detection data 61 may comprise detection data generated at past laser cutting operations, with the reference detection data 61 relating to material properties of e. g. inclusions of resins 11 and knots 12, zones of different materials 13, of transition zones 14 etc.

In embodiments and as also shown in FIG. 7, the computing unit 5 stores the artificial intelligence model 62 and/or the reference detection data 61. This enables a constant and reliable availability of both, the intelligence model 62 and/or the reference detection data 61, for current laser cutting operations. In some embodiments, the computing unit 5 may be comprised by the laser cutting system 1. In some embodiments, the computing unit 5 may be positioned remote from the system 1. This enables a flexible deploy of the laser cutting system 1 independently of the computing unit. In embodiments, the computing unit may be comprised by an individual computing machines such as a personal computer. In embodiments, the computing unit may be comprised by a network computing system. In some embodiments, the computing unit 5 may be interconnected with a communication interface of the laser cutting system 1, utilizing a wired or wireless Local Area Network (LAN) or a wireline or wireless Metropolitan Area Network (MAN) or a wire-line or wireless Wide Area Network (WAN) such as the Internet or a combination of the aforementioned network technologies being implemented by any suitable communication and network protocols. In embodiments, the computing unit 5 may be employed by two or more laser cutting systems 1. This enables a flexible adaptation of the computing unit 5 to the requirements of the laser cutting system 1 and the laser cutting process.

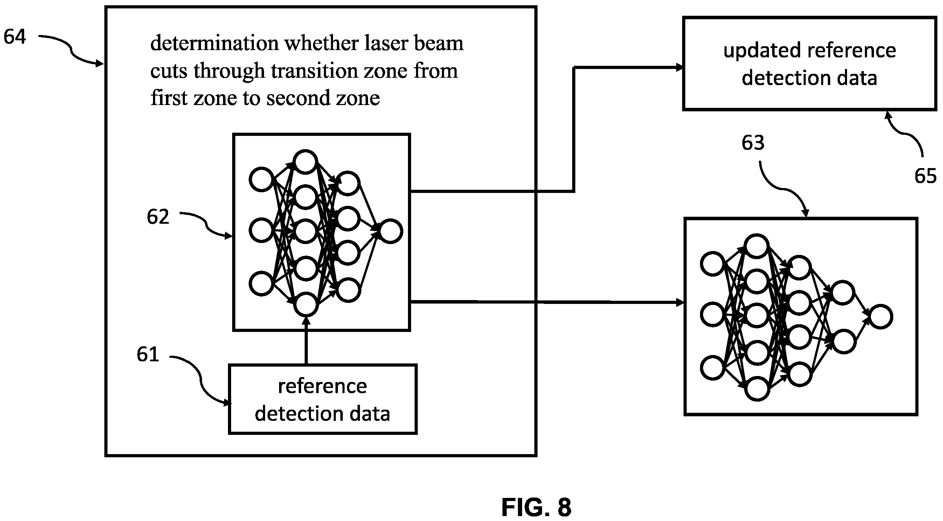

In embodiments and as shown in FIG. 8, the artificial intelligence model 62 and/or the reference detection data 61 are configured to be updated 63, 65 based on the determination 64 whether the laser beam is cutting through the transition zone from the first zone to the second zone of the workpiece. This ensures that the laser cutting system 1 is able to constantly upgrade to situations in which materials so far new and unknown to the system 1 are to be cut and to reuse the learning results gained when cutting such new and unknown materials in future, similar situations. To cite an example, when cutting with the laser cutting beam 2 through an inclusion comprising a new filling, e. g. a new type of resin so far unknown to the artificial intelligence model 62 of the laser cutting system 1 and not being reflected by the reference detection data 61 so far, new detection data relating e. g. to radiative reflectivity and spectral composition, will be collected by the sensors 4, 5 and 6. These collected data are used to update 63 the artificial intelligence model 62 e. g. by generating new layers in an artificial network to reflect the new learned operational parameters for the new type of resin, and to update 65 the reference detection data 61 to reflect the new material unknown to the laser cutting system 1 so far, as shown in FIG. 8.

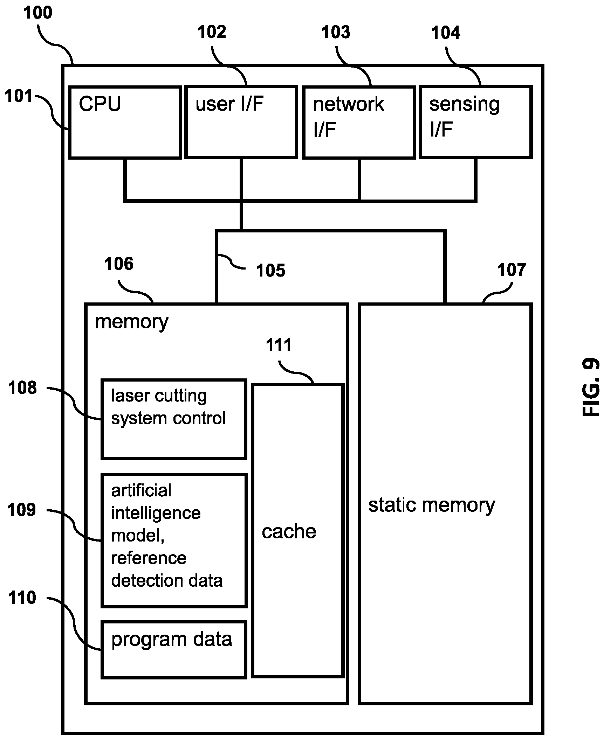

FIG. 9 is a diagrammatic representation of internal components of a data processing system 100 implementing the functionality as described herein. The data processing system 100 may be located in the computing unit 5 of the laser cutting system 1 and includes at least one processor 101, a user interface 102, a network interface 103 and a main memory 106, that communicate with each other via a bus 105. Optionally, the data processing system 100 may further include a static memory 107 and a disk-drive unit (not shown) that also communicate with each via the bus 105. A video display, an alpha-numeric input device and a cursor control device may be provided as examples of user interface 102.

Furthermore, the data processing system 100 may also comprise a specified sensing interface 104 to communicate with the sensors 4, 6 of the laser cutting system 1. Alternatively, the data processing system 100 may communicate with the laser cutting system 1 via the network interface 103. The processor 101 is used for generating detection data relating to the material properties of the workpiece. The data processing system 100 may also be connected to database systems (not shown) via the network interface, wherein the database systems store at least part of the detection data 60, reference detection data 61 and artificial intelligence model 62 needed for providing the functionalities described herein.

The main memory 106 may be a random-access memory (RAM) and/or any further volatile memory. The main memory 106 may store program code for the laser cutting system control 108. The main memory may store 109 the operational parameters 50, the detection data 60, the reference detection data 61, the artificial intelligence model 62 etc. The memory 106 may also store additional program data 110 required for providing the functionalities described herein. Part of the program data 110, the operational parameters 50, the artificial intelligence model 62, the detection data 60, the reference detection data 61 and/or the laser cutting system control 208 may also be stored in a separate, e.g. cloud memory and executed at least in part remotely. In such an exemplary embodiment, the memory 106 may store the operational parameters 50, the detection data 60, the reference detection data 61, and parts of the artificial intelligence model 62 according to the methods describes herein in a cache 111.

According to an aspect, a computer program comprising instructions is provided. These instructions, when the program is executed by a computer, cause the computer to control the laser cutting system 1 and/or carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A portable system for laser cutting of workpieces comprising organic materials comprising a first and a second zone having different material properties and being non-detectable from the surface of the workpiece, the system comprising at least:
• a laser beam for cutting the workpiece;
• a laser cutting head comprising at least one non-imaging detector, the laser beam emanating from the laser cutting head;
• a computing unit;
the system being configured to:
• execute, by the laser cutting head, a laser cutting operation on the organic material of the workpiece, with the laser cutting head being controlled by operational parameters;
• while executing the laser cutting operation:
∘ detect with the at least one non-imaging detector a change of back radiations emanating from the workpiece, thereby generating detection data indicating the change of the back radiations;
∘ process, by the computing unit, the detection data to determine whether the laser beam is cutting through a transition zone from the first zone to the second zone of the organic material of the workpiece;
∘ based on the determination, adapt at least one operational parameter of the operational parameters, to adjust the laser cutting operation of the laser cutting head for the second zone;
∘ continue laser cutting through the second zone of the workpiece by executing the adjusted laser cutting operation by the laser cutting head.

2. The system of claim 1, wherein the laser beam comprises ultraviolet and/or visible light and/or infrared radiation.

3. The system of any one claims 1 to 2, the system being further configured to detect with at least one further non-imaging detector comprised by the laser cutting head, a change of gaseous emissions from the workpiece, thereby generating detection data indicating the change of gaseous emissions.

4. The system of any one of claims 1 to 3, wherein the at least one non-imaging detector and the at one further non-imaging detector comprise one or more photodiodes and/or single-pixel-detectors and/or spectrometers and/or gas detection units.

5. The system of claim 4, wherein at least one of the one or more gas detection units may be located on a side of the workpiece facing away from the laser cutting head.

6. The system of any one of claims 1 to 5, wherein the operational parameters comprise an average laser power and/or a laser-cutting speed and or laser wavelength and/or pulse energy and/or pulse duration and/or process gas flow.

7. The system of any one of claims 1 to 6, being further configured to process the detection data by using an artificial intelligence model and reference detection data indicating the different material properties.

8. The system of claim 7, wherein the computing unit stores the artificial intelligence model and/or the reference detection data.

9. The system of claim 7 or claim 8, wherein the artificial intelligence model and/or the reference detection data is configured to be updated based on the determination whether the laser beam is cutting through the transition zone from the first zone to the second zone of the workpiece.

10. A method for laser cutting of workpieces comprising organic materials comprising a first and a second zone having different material properties and being non-detectable from the surface of the workpiece, the method being executed at a portable system for laser cutting comprising at least a laser beam for cutting the workpiece, a laser cutting head comprising at least one non-imaging detector, the laser beam emanating from the laser cutting head and a computing unit, the method comprising, at the system:
• executing, by the laser cutting head, a laser cutting operation on the organic material of the workpiece, with the laser cutting head being controlled by operational parameters;
• while executing the laser cutting operation:
∘ detecting with the at least one non-imaging detector a change of back radiations emanating from the workpiece, thereby generating detection data indicating the change of the back radiations;
∘ processing, by the computing unit, the detection data to determine whether the laser beam is cutting through a transition zone from the first zone to the second zone of the organic material of the workpiece;
∘ based on the determination, adapting at least one operational parameter of the operational parameters, to adjust the laser cutting operation of the laser cutting head for the second zone;
∘ continuing laser cutting through the second zone of the workpiece by executing the adjusted laser cutting operation by the laser cutting head.

11. The method of claim 10, further comprising, at the system: detecting with at least one further non-imaging detector comprised by the laser cutting head, a change of gaseous emissions from the workpiece, thereby generating detection data indicating the change of gaseous emissions.

12. The method of any one of claims 10 to 11, further comprising, at the system:
processing the detection data by using an artificial intelligence model and reference detection data indicating the different material properties.

13. The method of claim 12, further comprising, at the system: storing the artificial intelligence model and/or the reference detection data at the computing unit.

14. The method of any one of claims 12 to 13, further comprising, at the system: updating the artificial intelligence model and/or the reference detection data based on the determination whether the laser beam is cutting through the transition zone from the first zone to the second zone of the workpiece.

15. A computer program product comprising a computer-readable medium storing program code implementing the method of any one of claims 10 to 14.
